# EUROPEAN PATENT SPECIFICATION

(11) **EP 4 519 580 B1**
(45) Date of publication and mention of the grant of the patent: **01.07.2026**
(21) Application number: 23725669.8
(22) Date of filing: 08.05.2023
(51) Int. Cl.: F16B 7/18, F16B 37/04, F16B 39/282

(54) **CONSTRUCTION SYSTEM**
KONSTRUKTIONSSYSTEM
SYSTÈME DE CONSTRUCTION

(30) Priority: 06.05.2022 EP 22172074
(43) Date of publication of application: 12.03.2025
(73) Proprietor: Infento Property B.V., 1043 AP Amsterdam (NL)
(72) Inventor: LETEMA, Hemmo Sander, 1043 AP Amsterdam (NL); ROTTING, Spencer Eelko, 1043 AP Amsterdam (NL)
(74) Representative: De Vries & Metman
(86) International application number: PCT/EP2023/062156
(87) International publication number: WO 2023/214096

(56) References cited:
- EP-A1- 3 658 789
- WO-A1-2021/184351
- DE-A1- 19 914 398
- DE-A1- 4 244 396
- DE-U1- 29 824 254

## Description

### TECHNICAL FIELD

A construction system comprising a profile member extending along a profile axis and having a face provided with at least one recess, a connection member being configured for being fixed onto the face, and a fastener, such as one or more of a screw, a bolt, a rivet, and a nut, for fastening the connection member onto the face.

### BACKGROUND

Such construction systems are well known for realising stationary constructions. E.g. US 2004/0033103 A1 discloses a connection of streamlined-section struts (12, 14), the struts (12, 14) running orthogonal to one another with an essentially rectangular base cross-section (18) using a connection member (connector 16). The connection member (16) is mounted to a lateral surface (18a) having a mounting groove (18b) of a strut (12, 14) using hammerhead nuts (24). In particular, US 2004/033103 discloses a connection (10) of two streamlined-section struts (12, 14) running orthogonally to one another with an essentially rectangular base cross section (18) using a connector (16). The lateral surface (18a) of one (14) of the streamlined-section struts has a mounting groove (18b), as well as an edge flange (18c), which projects substantially orthogonally from an edge of this lateral surface (18a) at a predetermined distance (b). The connector (16) can be attached to the lateral surface (18a) of the one streamlined-section strut having the mounting groove (18b) and to the front side of the other streamlined-section strut (12). The contour of the connector (16) is accommodated substantially completely within the base cross section (18) of the other stream lined-section strut (12). In addition, the depth of the connector (16) is essentially the same as the predetermined distance (b).

DE 35 37 135 A1 and DE 86 23 325 U1 disclose a treaded element for fastening a connecting member to a profile member. The profile member has a T-shaped longitudinal groove and the treaded element is a fixation nut having a parallelepiped-shaped head portion and a neck portion matching the T-shape of the groove. DE 199 14 398 A1 discloses a fastening device for a member to another member having an undercut groove. A fixation nut or -screw may be arranged in the groove, for which an electrically insulating cap is provided.

The present applicant has found that such profile element based construction systems may also be used for realising moving constructions, such as for transporting objects and/or humans. Consequently, the present applicant has developed several designs and kits of profile members, construction members, and fasteners the above-referenced type, together with further parts, for constructing so-called "rides" such as scooters, bicycles, tricycles, karts, ride-on toys and the like, including snow-and ice-vehicles like sleds, snow scooters, skiing chairs etc. Such rides may be muscle-powered and/or engine driven. See the applicant's website www.Infento.com for some examples.

Demands on stability, robustness and reliability of such moving constructions differ significantly from those on stationary constructions due to the dynamic loads, rather than static loads. Further, there is a desire to improve ease of use for changing design-and/or construction details, e.g. adding or removing parts to/from such a construction without affecting other parts. However, the demands of robustness when mounted and in use, versus flexibility for adaptation of a construction, tend to be in conflict. Improvements addressing one or more of these issues are therefore desired.

It is noted that DE 298 24 254 U1 discloses a fastening device for anchoring a structural part to a base component by means of an anchor part
- wherein the base component (19) has an elongate reach-through opening in a clamping surface (22) and an abutment (23) on the opposite side thereof,
- The structural part being able to be clamped to the base component (19) by a shank of the anchor part (2) and
- wherein at least one arm (13) of an anchor head (2) of the anchor part that can be connected to the shaft is attached to the abutment (23 ) arrives, after which the anchor head (2) is pulled onto it by the spring action (7) for self-locking,
   characterized in that,
- the spring part (1) has a flange (3) running transversely to the shank, the respective surface dimensions of which are larger than the width of the reach-through opening,
- leaf springs (7, 17, 18) acting in the direction of the shaft are arranged on the flange (3),
- so that after turning the anchor part (2), the leaf springs (7, 17, 18) act on the clamping surface (22).

DE 42 44 396 A1 discloses a coupling piece for the releasable connection of two profile beams. The connector has at least one eccentric centring member (14,15) engaging in at least one longitudinal groove (3,4) of one of the rods (1,2). The centring member(s) at least partly match in profile the internal profiling of the grooves in the rod and engage with keyed engagement. Two centring members can be formed in one piece with the connector (11) symmetrically relative to the centre bore (10). On the underneath of a plate element (12) near the central bore (10) is an attachment (13) projecting through the longitudinal groove into the inner space.

WO 2019/020319 A1 discloses a mounting rail having a fastening element. The document relates to a rectangular tube-shaped mounting rail (1) having a hammerhead bolt as fastening element (6). The document proposes that the mounting rail (1) be formed with beads as depressions (2) which extend in the longitudinal direction and in which there is sunk a perforated-disc-shaped abutment (11) which is placed on a screw shank (8) of the fastening element (6).

### SUMMARY

In view of the preceding, herewith is provided a construction system as follows, in accordance with the appended claims.

The construction system comprises
a profile member extending along a profile axis and having a face provided with at least one recess;
a connection member being configured for being fixed onto the face and for connecting a further member;
a fastener, such as one or more of a screw, a bolt, a rivet, and a nut, for fastening the connection member onto the face.

The connection member comprises a mounting side for mounting to the face, at least the mounting side being resiliently deformable and the mounting side being provided with protrusions receivable in the at least one recess.

The system is arranged for, when the protrusions are received in the at least one recess, the fastener reversibly fixing the connection member to the profile member and reversibly causing urging the protrusions outwardly against opposite outer walls of the at least one recess.

In the system, further connection members and/or profile members can be fixed to the connection member and/or by the fastener. For that, the connection member may be configured for connecting a further member to the profile member, e.g. a corner member, a hinge member, an axle support, etc. Also or alternatively, the connection member may be configured for connecting to a further, same, connecting member for interconnecting two profile members via the connected connection members. For that, the respective connection members may be oriented opposite to each other and face each other with respective connection portions, which connection portions may then interengage, etc., see also below.

The connection member may be a unitary member, possibly monolithic. The connection member may be a connection plate. The mounting side may be provided by a surface of the connection member. The protrusions may be provided as one or more stubs and/or as one or more ribs.

The face preferably is plane at portions (to be) engaged by the connection member, such plane portions preferably being parallel and more preferably being in a single plane; efficiently, the face may be a substantially flat face, e.g. being flat except for the at least one recess and possibly one or more bevels and/or chamfers. The at least one recess may be formed by one or more blind holes or through holes in the face, and/or a slot along the face.

In the construction system, the connection member is, in the fastened configuration, braced to the profile member; the connection member is not only attached to the profile member by the fastener but the connection member is stressed by it, and such that the protrusions and the at least one recess interact. The interaction fortifies the attachment. This provides one or more of: accepting larger fastening tolerances, accommodating tolerances and/or tolerance stacking between (position and/or orientation of) the connection member and the profile member, mitigating shocks, preventing loosening of the fastener, reduction or prevention of release of the connection member and the profile member, and reduction or prevention of relative rotation of the connection member and the profile member. Thus, a construction built with the construction system may be robust both under static and dynamic loads.

Further, by resilient deformation of the connection member, deformation may be substantially limited to the connection member itself and deformation of the profile member associated with the fastening of a connection member may be prevented. Thus, plural mounting plates may be attached to and/or removed from a profile member without affecting (fastening of) a connection member by one or more of presence, absence, displacement, and fastening strength of another connection member. The applicant has found that in prior art construction systems of the present type, the profile members tend to deform upon fastening further elements to the profile members so that in case of attaching different elements to one profile member these elements and/or their attachment interfere.

The mounting side may be in an unfastened configuration resiliently concave, for, when the protrusions are received in the at least one recess, engaging the face on opposite sides of the fastener and keeping a central portion arranged in between the engaging portions spaced from the face, and by fastening the fastener to provide a fastened configuration, resiliently flattening at least the central portion of the mounting side towards the face and urging the protrusions outwardly against opposite outer walls of the at least one recess.

The flattening may be such that the central portion is flattened against the face by the fastener. The fastener may be configured to press the mounting side to the face.

The concave shape may be at least partly concave in one direction, e.g. being bent in one direction such as being cylindrical. Also or alternatively, the concave shape may be at least partly concave in two directions, e.g. being bent in two direction such as being ellipsoidal or spherical.

A polygonal concave shape may be used but a monotonic curvature, e.g. an ellipsoidal-, a sinusoidal-, parabolic-or a circular curvature, may be preferred and may assist providing a well-defined deformation and/or assist preventing localised stress.

In at least one embodiment of the system, the profile member is elongate along a profile axis, preferably having a constant cross-sectional shape in a direction perpendicular to the profile axis. Also or alternatively, in at least one embodiment of the system; and/or the profile member has a generally polygonal circumference, in particular rectangular circumference, e.g. square circumference. In any such embodiment the face may be a side face parallel along the profile axis, or an end face having a normal oriented at an angle to the profile axis of 0, 15, 30, 45, 60 or 75 degrees.

The profile member may be manufactured efficiently by extrusion techniques. A polygonal circumference facilitates providing flat faces. The profile member may e.g. have a rectangular circumference such as square circumference. Also or alternatively an end face may have a normal oriented at an angle to the profile axis of 0, 15, 30, 45, 60 or 75 degrees. This may facilitate design and/or realisation of a construction, and/or it may facilitate robustness of a construction. In particular, an end face having a normal oriented at an angle to the profile axis of ca. 0 degrees, i.e. the face being oriented perpendicular to the profile axis, may simplify construction. Perpendicular faces are also effectively provided by a rectangular circumference of the profile element.

Perpendicular faces, and/or an end face perpendicular to the profile axis, may facilitate providing one or more walls of the at least one recess oriented along the profile axis, in particular if the at least one recess extends along a profile axis along or perpendicular to the profile axis.

The face may be provided with plural recesses, wherein the connection member is arranged such that at least some of the protrusions are receivable in several of the plural recesses simultaneously and for, in the fastened configuration, urging the at least some of the protrusions outwardly against outer walls of the several recesses.

In such case interaction between the protrusions and plural recesses may improve engagement and/or coupling strength, and/or may assist preventing rotation when fastened. The plural recesses may, preferably, be arranged in an end face. The connection member may have a general circumference associated with, or preferably equal to, a general circumference of the profile member, e.g. both having a polygonal circumference, preferably a rectangular circumference such as a square circumference and preferably both having the same size so that the connection member may substantially form a continuation of the profile member, possibly without one or more recesses in side faces of the profile member. At least some of the protrusions may be arranged at or near corners of a polygonal connection member and/or the recesses may be arranged at or near corners of a polygonal profile member.

The (mounting side of the) connection member may be biconcave, with equal or different concave shapes and/or sizes; thus the protrusions may be urged outward in a radial and/or two perpendicular directions with respect to the fastener.

The at least one recess may be formed as an undercut groove partly defined by overhanging flange portions, wherein the overhanging flange portions may provide said outer walls of the at least one recess.

An undercut groove provides a T-shaped recess in cross section. The overhanging flange portions may be flat on an outside and/or inside, which may reduce material consumption and/or prevent localized stress. Fastening may be achieved by clamping onto the flange portions. The flange portions may be part of and/or define at least part of the face.

A cross-sectionally T-shaped recess, having a relatively narrow entrance and a wider portion behind the entrance, facilitates holding at least part of a fastener and/or a counterpart in the recess. Also or alternatively, it facilitates fastening by clamping onto the neck portion.

By the overhanging flange portions providing said outer walls of the at least one recess, the protrusions may be comparably small and need not reach underneath the flange portions to engage outer wall portions of the wider portion. This may one or more of facilitate production and/or use, provide robustness of the operable engagement of the protrusions and the outer wall, increase strength of the protrusions and/or the connection member as a whole.

The profile member may define a C-shaped cross-sectional shape perpendicular to the face and/or perpendicular to the profile axis. Also or alternatively the at least one recess may be formed in the face as an elongated groove parallel to the profile axis. A groove along the face may allow selective localisation and/or displacement of the fastener and therewith of the connection member to the profile member.

The profile may have plural sides with similar, possibly essentially identical shapes, e.g. the profile having a rotational symmetry in multiple rotational angles, e.g. having a twofold or fourfold symmetry.

The connection member may be provided with a profiled connection portion, preferably opposite of the mounting side. Then, the profiled connection portion may be provided with one or more protrusions and/or recesses defining predetermined connection positions and/or -orientations for complementary mounting portions such as a same connection member. The profiled connection portion may define a fastener position and/or fastener axis and comprise plural protrusions such as ribs oriented radially around the fastener position and/or fastener axis.

The connection portion facilitates connecting further members to the connection portion. The profile facilitates determining and possibly maintaining predefined relative positions and/or orientations of the connected members. In particular in case of a profiled connection portion comprising plural protrusions, such as ribs, oriented radially around an axis, relative angular orientation may be well determined and/or maintained.

Further to the description below, the fastener may be a threaded device, in particular a threaded screw bolt. The profile member may comprise one or more matching holes which may be threaded and/or may be treadable by screwing the fastener into the hole, and which may help define a fastener position and/or fastener axis. The fastener may comprise, or be, a threaded bolt and the system may further comprise a fixation nut matching the fastener. The fixation nut may be arrangeable in at least one of the recesses, e.g. in an undercut groove, and the fixation nut may than be movable, e.g. slidable, in the recess when in an unfastened configuration and fixed in a fastened configuration upon fastening the fastener.

By radial orientation about the fastener position and/or fastener axis, a natural axis may be provided for connections. The fastener axis may be associated with the fastener for fastening the connection member to the profile member and/or with a fastener for fastening the connection member to another connection member and/or profile member, e.g. the profiled connection portion being oriented at an angle to, e.g. perpendicular to, the mounting side.

In a system comprising plural same connection members interconnection of the members may be facilitated and construction of different designs may be facilitated.

In an aspect, associated with, and possibly combined with, one or more other aspects of a construction system discussed herein, herein is provided a construction system comprising
a profile member extending along a profile axis and having a face provided with at least one recess,
a connection member being configured for being fixed onto the face and for connecting to further member;
a fastener, such as one or more of a screw, a bolt, a rivet, and a nut, for fastening the connection member onto the face;
in particular a construction system according to any other aspect and/or embodiment disclosed herein,
wherein the at least one recess has a general T-shape in cross-section by the profile comprising a neck portion providing the recess with a relatively narrow entrance and a wider open portion behind the entrance, e.g., an undercut groove partly defined by overhanging flange portions,
wherein the fastener has a hammerhead shape for operable accommodation in the recess and comprises a first structure cooperating with a second structure of the connection member for in cooperation defining a relative rotary position of the fastener and the connection member about the fastening axis.

The T-shaped recess may be provided by or as an undercut groove partly defined by overhanging flange portions.

A hammerhead shape of the fastener allows introduction of the fastener into the recess, and/or removal from the recess, in one orientation and in another orientation engaging the neck portion, e.g. the flange portions, for fastening onto the neck portion.

By the cooperating first and second structures displacement of the fastener and connection member relative to the profile member may be facilitated without the fastener and/or the connection member becoming (at least partly) detached. This facilitates realising and/or adapting a construction, and/or it increases security of fastening by reducing or preventing inadvertent reorientation of the fastener and the connection member which reorientation might result in suboptimal fastening if undetected.

The cooperating structures may define a relative rotary position with respect to the fastening axis in an unfastened configuration, facilitating the orientation when moving the connection member.

The cooperating first and second structures may comprise at least one guiding portion for guiding the fastener and the connection member towards the defined relative rotary position, in particular for guiding in an unfastened configuration of the fastener.

This allows improving achieving the defined relative rotary position, which may further increase ease of use and/or security. Guiding in an unfastened configuration may assist achieving and/or maintaining the defined relative rotary position during one or more of fastening, realising, and adapting a construction.

Both the first and second structures may be configured to be at least partly arranged on opposite sides of the fastener in a direction along the profile axis.

This may improve robustness and/or reliability.

The fastener may comprise a twist flange and associated twist collar, defining a longitudinal and a lateral direction, wherein the twist flange has a lateral flange side and the collar has an associated lateral collar side, wherein the lateral collar side is rotationally offset from, the lateral flange side.

The longitudinal and lateral direction may be associated with the hammerhead shape. The twist flange may have a rhomboid shape about a fastener axis, wherein the blunt angle may be rounded off, e.g. as generally shown in the above-referenced DE 35 37 135 A1, DE 86 23 325 U1, and DE 199 14 398 A1. Such twist flange shape may increase size and/or material of the flange while still allowing introduction thereof into the recess, and therewith strength and/or robustness of the flange and of the fastener as a whole are improved. The twist collar may have a similar shape. At least part of twist collar may provide the second cooperating structure.

By the rotational offset of the lateral flange side and the lateral collar side the twist flange may laterally protrude from the twist collar. This may one or more of increase freedom for insertion of the fastener into the recess, simplify orienting the fastener in the recess, and manufacturing and/or design and/or use of the cooperating structures and/or of the guiding structures, if present.

In particular, the fastener may comprise a threaded portion defining a fastener axis wherein relative to the fastener axis the twist flange has a generally rhomboid- or parallelogram-shape in cross section with relatively short flange sides and relatively long lateral flange sides, opposite relatively sharp flange corners at a large flange radius, and opposite relatively blunt flange corners at a small flange radius, which may be rounded, and the collar may have a generally parallelogram-shape in cross section with opposite relatively sharp collar corners at a large collar radius and opposite relatively blunt collar corners at a small collar radius, which may be rounded. The sharp collar corners may be generally aligned towards the sharp flange corners or be directed towards the short flange sides.

The fastener may comprise a threaded portion defining a fastener axis wherein the collar has at least one perpendicular corner, preferably two perpendicular corners, about the fastening axis.

The second cooperating structure may be comprised in the protrusions of the mounting side of the connection member.

This may facilitate one or more of design, construction and robustness of at least the protrusions.

In an aspect, associated with, and possibly combined with, one or more other aspects of a construction system discussed herein, and having the discussed benefits, herein is provided a hammerhead fastener for any embodiment of a construction system as described herein, comprising a twist flange for being received in a groove of a profile member of the construction system and associated twist collar, the twist flange defining a longitudinal direction for operable orientation generally transverse to a profile member of the construction system and a lateral direction for operable orientation generally in the axial direction of a profile member of the construction system, wherein the twist flange has a lateral flange side and the collar has an associated lateral collar side, wherein the lateral collar side is rotationally offset from the lateral flange side.

The hammerhead fastener may comprise a threaded portion defining a fastener axis wherein relative to the fastener axis,
the twist flange may have a generally rhomboid- or parallelogram-shape in cross section with relatively short flange sides and relatively long lateral flange sides, opposite relatively sharp flange corners at a large flange radius, and opposite relatively blunt flange corners at a small flange radius, which may be rounded, and
the collar may have a generally parallelogram-shape in cross section with opposite relatively sharp collar corners at a large collar radius and opposite relatively blunt collar corners at a small collar radius, which may be rounded; and
wherein the sharp collar corners may be generally aligned towards the sharp flange corners or be directed towards the short flange sides.

Such hammerhead fastener may comprise a threaded portion defining a fastener axis wherein the collar has at least one perpendicular corner, preferably two perpendicular corners, about the fastener axis.

This may prevent a sharp corner of the twist collar which may increase robustness. Also or alternatively this may facilitate interaction with second structures of a connection member and/or with guiding portions thereof.

### BRIEF DESCRIPTION OF THE DRAWINGS

The above-described aspects will hereafter be more explained with further details and benefits with reference to the drawings showing a number of embodiments by way of example.
Fig. 1 is an exploded view of a construction system as provided herein.
Figs. 2-3 show a profile member of the construction system;
Figs. 4 and 6 show a first connection member of the construction system;
Fig 5A is a side view of a first connection member with an indication of a profile member;
Figs. 5B-5C show assembly of part of the construction system in cross section views in plane V-V indicated in Fig. 1 and 3;
Figs. 7-10 show a second connection member of the construction system;
Figs. 11-12 show assembly of part of the construction system;
Figs. 13-14 show a twist nut of the construction system.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc. The verb "to facilitate" is intended to mean "to make easier and/or less complicated", rather than "to enable".

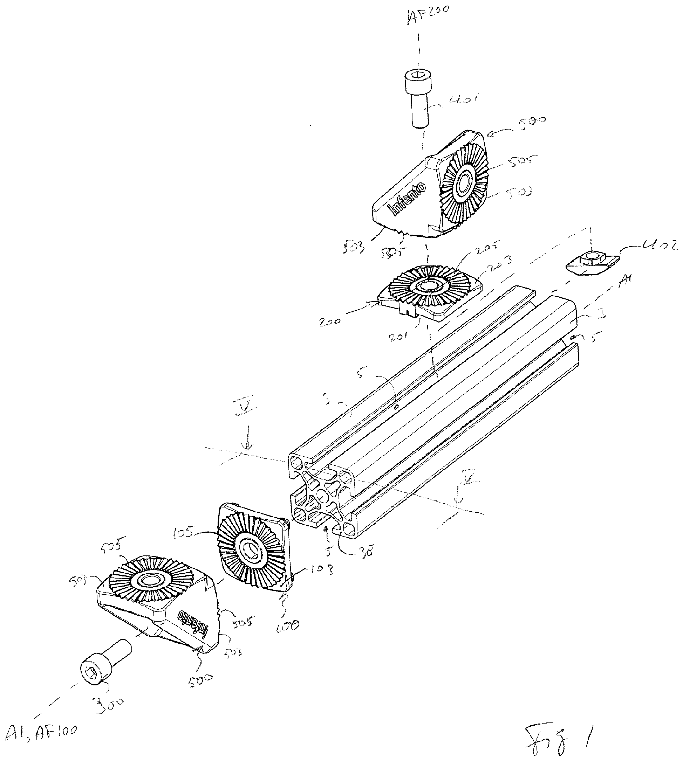

Fig. 1 shows a construction system comprising a profile member 1 having side faces 3 provided with grooves 5 and an end face 3E. The construction system also comprises a first connection member 100 and a second connection member 200, a first fastener 300 and a second fastener 400, wherein the second fastener 400 comprises a bolt 401 and a twist nut 402. The construction system further comprises optional corner members 500 for connecting further members (not shown) at an angle to the profile member 1.

The first and second connection members 100 and 200 each comprise a respective mounting side 101, 201 for mounting to a face of a profile element 1, see below.

As explained below, the first connection member 100 is fastenable to the profile member 1 using the first fastener 300. A fastener axis AF100 defined by the connection member 100 is parallel to, here coinciding with, the profile axis A1, and perpendicular to the end face 3E.

The second connection member 200 is fastenable to the profile member 1 using the second fastener 400, by extending the bolt 401 through the second connection member 200 and fastening it to the twist nut 402 received in a groove 5 (see dashed lines). In particular, by extending the bolt 401 also through the corner member 500, the corner member is fixed onto the connection member 200 and therewith the corner member 500 is fixed to the profile member 1, see also below. A fastener axis AF200 defined by the connector member 200 is perpendicular to the profile axis A1 and to the side face 3.

The connection members 100, 200 and each corner member 500 each comprise a respective connection side 103, 203, 503, provided with a profiled connection portion 105, 205, 505 which may interengage when two such connection portions 105, 205, 505 face each other. Thus, a predetermined relative rotary position of the respective members 100, 200, 500 may be provided and fixed. Note that the shown corner members 500 are identical and comprise two connection sides 503, each optionally provided with such profiled connection portion 505. Here, the connection sides 503 of each corner member 500 are arranged perpendicular to each other, but any other relative angle may be provided. Also or alternatively a corner member 500 may have more than two connection sides 503, each optionally provided with such profiled connection portion 505, e.g. three, four, five or six such sides in case of a rectangular e.g. cubic corner member.

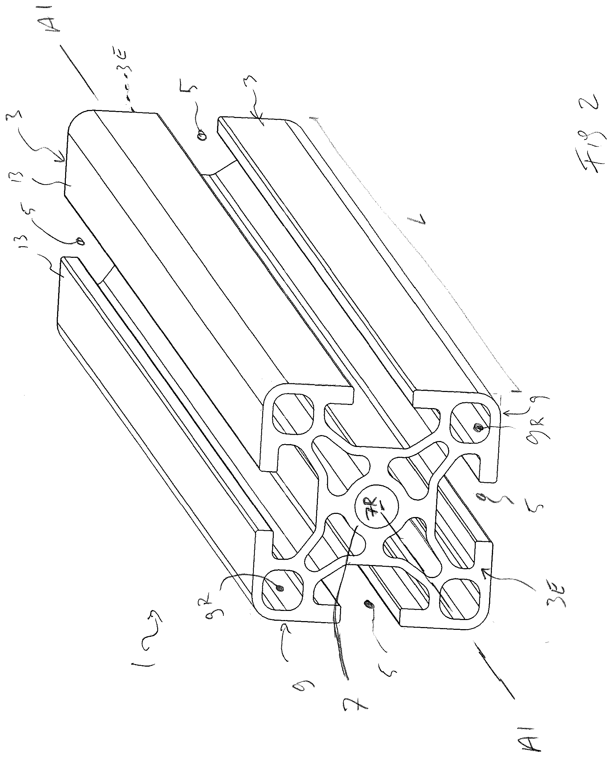

Figs. 2-3 show the profile member 1 which is elongated along a profile axis A1 and may have any length L. The profile member 1 has, optionally, a constant shape in cross section along the profile axis A1. The profile member 1 may be manufactured efficiently by extrusion techniques. The profile member 1 may be rigid so that it is essentially undeformed and can withstand bending stresses under static loads and/or dynamic loads of a "ride". The profile member 1 may be of a metal such as aluminium or steel.

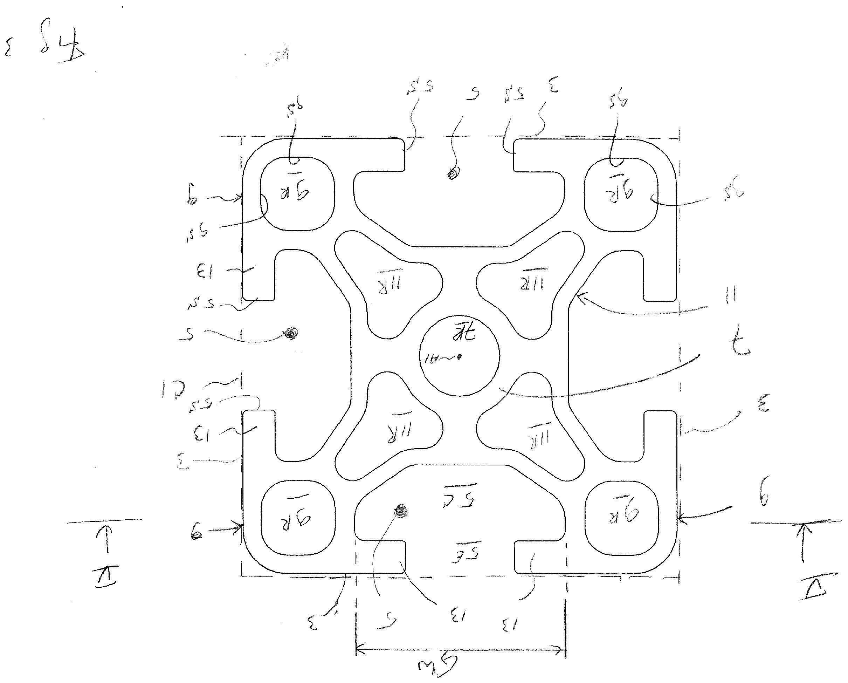

The shown profile member has four side faces 3 defining a generally rectangular circumference C1, here: a square with optionally rounded corners, see Fig. 3. The profile member 1 has end faces 3E oriented perpendicular to the profile axis A1. Each side face 3 is provided with an undercut groove 5 but one or more faces may be without a grove and/or one or more faces may comprise more than one groove. One or more of the faces 3 may comprise a profile, such as one or more protrusions, e.g. longitudinal ribs. Here, as independent options the grooves 5 are in a centre of each side face 3 and extend along the profile axis A1, either or both may improve ease of use and/or strength. As a preferred option the shown profile member 1 has fourfold rotational symmetry about the profile axis 1A and/or mirror symmetry about one or more planes comprising the profile axis (e.g. in Fig. 3: about horizontal, vertical and both 45-degree diagonal planes containing the profile axis A1).

The profile member 1 comprises a central tube 7 having an aperture 7R along the profile axis 1A, and ribs 9 supported from the central tube 7 by spacers 11, the ribs 9 supporting overhanging flange portions 13 opposite each other, thus pairwise together defining the undercut groove 5. The groove 5 provides a recess 5R having a general T-shape in cross-section by a neck portion defined by the flange portions 13 providing the recess 5T with a relatively narrow entrance 5E and a wider open portion 5C behind the entrance 5E having a groove width GW. At the entrance 5E, the groove has inside surfaces 5S.The ribs 9 and flange portions 13 provide the side face 3 as a plane, except for (the entrance 5E of) the groove 5. The shown flanges 13 are plane and as an option have constant thickness but they may comprise one or more ribs oriented inward toward the central tube 7 (not shown).

The ribs 9 and the spacers 11 may be tubular as shown. This provides recesses 9R, 11R in each end face 3E, as shown, and this saves weight while retaining strength against deformation; the spacers 11 may have, as shown a generally triangular or rather pear-shaped opening for one or more of accommodating a suitable wall thickness of the central tube 7, extending substantially tangential to the central tube 7, providing a wide shape of the recess 5R, and supporting the ribs 9. The shown rounded corners of the profile member 1, e.g. in the recess 11 of the spacers 11 may prevent localisation of stress and/or may reduce costs of an extrusion die thus reducing manufacturing costs. The radially outer walls of recesses 9R have inside surfaces 9S.

The ribs 9 may, as here, define the circumference of the profile member 1. The side faces 3 may be generally plane by the flange portions 13 extending from the ribs 9 in one plane.

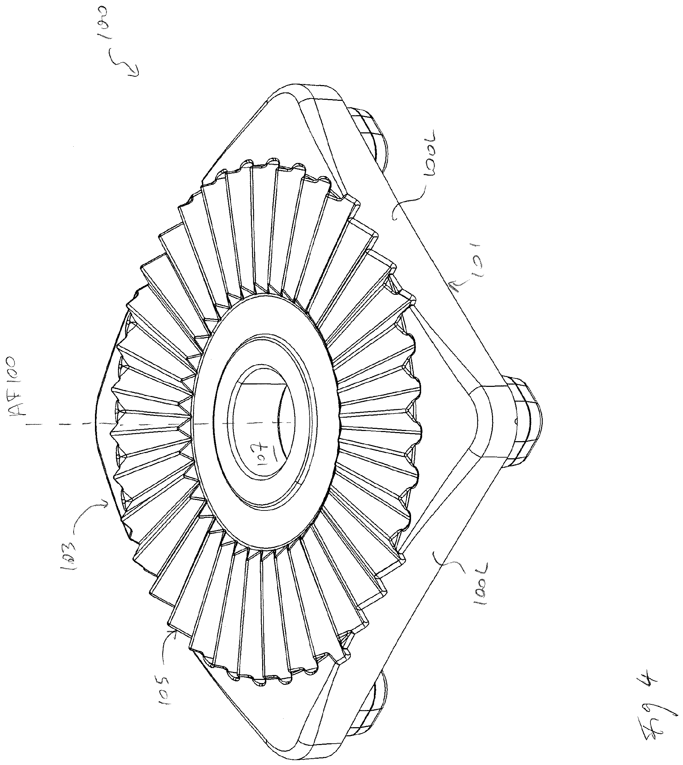

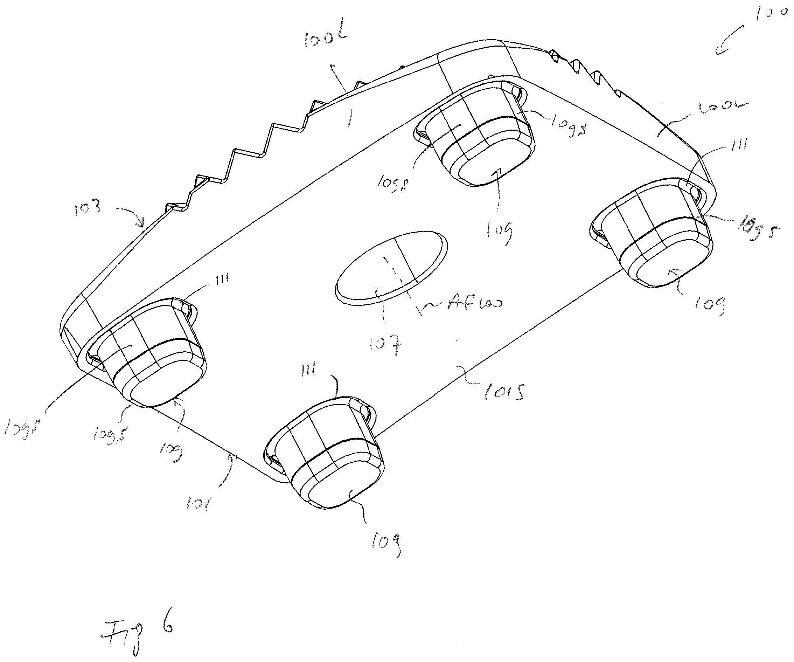

Figs. 4-6 show a first connection member 100 and its use in assembly of part of the system.

The connection member 100 comprises a mounting side 101 for mounting to an end face 3E of the profile element 1, and a connection side 103 opposite of the mounting side 101. Here, the connection side 103 is provided with a profiled connection portion 105. The connection member 100 further comprises an optional through hole 107 accommodating a fastener such as a threaded bolt 300 (not shown in Figs. 4-5), thus defining a fastener position (not separately indicated) and a fastener axis AF100.

The mounting side 101 is biconcave forming, at least in an unfastened state, a cavity between corners of the mounting side 101. The mounting side 101 comprises a mounting surface 101S provided with protrusions 109, here arranged near the corners of the generally square shape of the connection member 100. The protrusions 109 have outer surfaces 109S. As a preferred option the shown connection member 100 has rotational symmetry (here: fourfold rotational symmetry) about the fastener position and/or fastener axis AF100 and/or it may have mirror symmetry about one or more planes comprising the fastener position and/or the fastener axis AF100.

The protrusions 109 are receivable in the recesses 9R of (the ribs 9 of) the end face 3E of the profile member 1. The mounting surface 101S may then engage (the ribs 9 of) the end face 3E. The shape of the protrusions 109 and the recess 9R of the ribs 9 may be mated, e.g. here being shaped as a rounded-off square in cross section perpendicular to the profile axis A1 and/or to a direction of protrusion. The protrusions 109 and the recesses 9R may be shaped matingly to each other.

The connection member 100 may be moulded, e.g. of a polymeric and/or metallic material, e.g. aluminium or a (possibly fiber-reinforced) polymer. The protrusions 109 may be, as shown, at least partly provided with a moat 111 in the surrounding mounting surface 101S. This assists preventing a chamfer from the protrusion 109 to the mounting surface 101S that might otherwise interfere with defining a contact position between the mounting surface 101S and the face 3E.

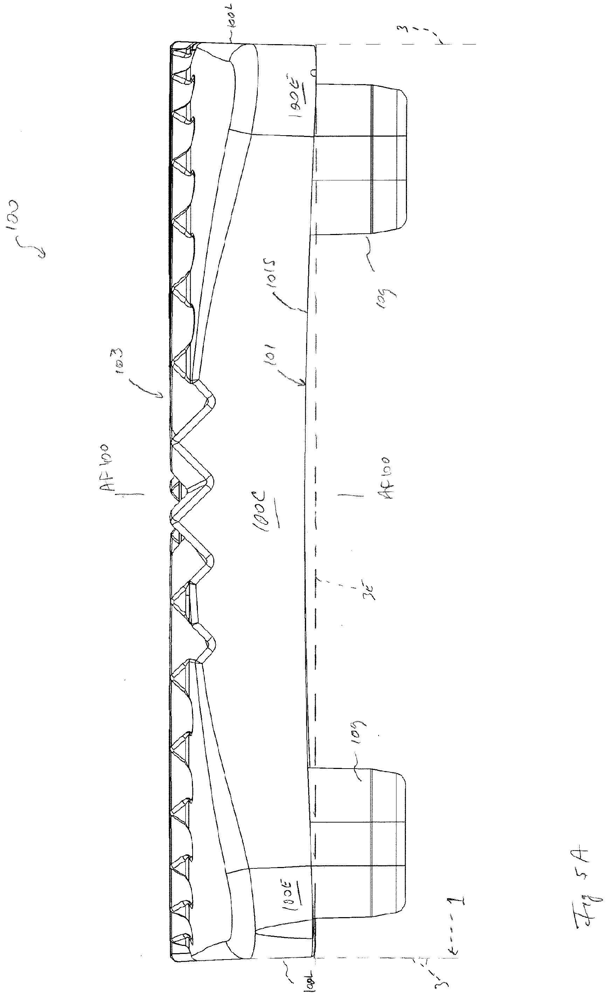

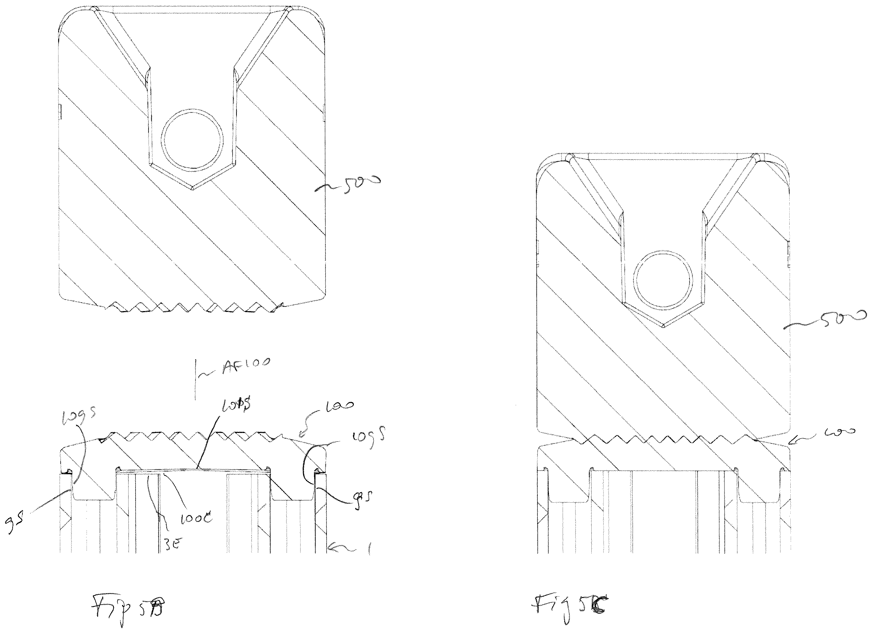

Referring also to Figs. 1-3, and in particular seen from comparing Figs. 5A-5C, for fastening the connection member 100 to (an end face 3E of) the profile member 1, the protrusions 109 are received in the recesses 9R of (the ribs 9 of) the end face 3E of the profile member 1, and a fastener such as a screw bolt 300 is arranged through the through hole 107 and screwed into the aperture 7R of the central tube 7 of the profile member 1, therewith also fastening the corner member 500 to the profile member 1. Thus, when the fastener 300 is not yet fully fastened, the protrusions 109 are received in the recesses 9R, the mounting surface 101S engages the end face 3E on opposite sides of the through hole 107 and the fastener, and a central portion 100C of the connection member arranged in between the engaging portions 100E is spaced from the end face 3E (see Fig 5B and the dashed line in Fig. 5A indicating an outline of the profile member 1 in such unfastened configuration).

By fastening the fastener to provide a fastened configuration, as shown in Fig. 5C, at least the central portion of the mounting side 101, here the entire connection member 100, is flattened towards the end face 3E by the force of the fastener towards the end face 3E and the mounting surface 101S engaging the end face 3E. By that also, due to the flattening of the concave shape of the connection member 100, the protrusions 109 are urged outward. Thus, the protrusions 109 are urged outwardly against outer walls of the recesses 9R on opposite sides of the profile axis A1, i.e. (outer sides 109S of) the protrusions 109 are urged against (inside surfaces 9S) of the recesses 9R in the ribs 9. (Note that due to the biconcave shape, the outward urging is in radial direction with respect to the fastener axis AF100 and the protrusions 109 are urged against both outward inside surfaces 9S of a single recess 9R together.) As a result, the connection member 100 is fastened and braced to the profile member 1, preventing relative translation along the end surface 3E and relative rotation about the profile axis A1.

Dimensions of the profile member 1 and the connection member 100 may preferably be chosen such that upon fastening the fastener the mounting surface 101 of the connection member 100 engages the end face 3E at the central portion 100C and the protrusions engage the outer walls, preferably then the protrusions 109 exert a predetermined force. The connection member 100 may be formed such that when thus fastened lateral sides 100L of the connection member extend parallel to sides 3 of the profile member 1, preferably being coplanar as well, compare the inclination of the lateral sides 100L relative to (the outline of) the side faces 3. Also or alternatively, the connection member 100 may be formed such that when thus fastened the connection side 103 is generally flat, e.g. the minima and/or maxima of profiles such as ribs of profiled connection portion 105 being generally in a respective common plane.

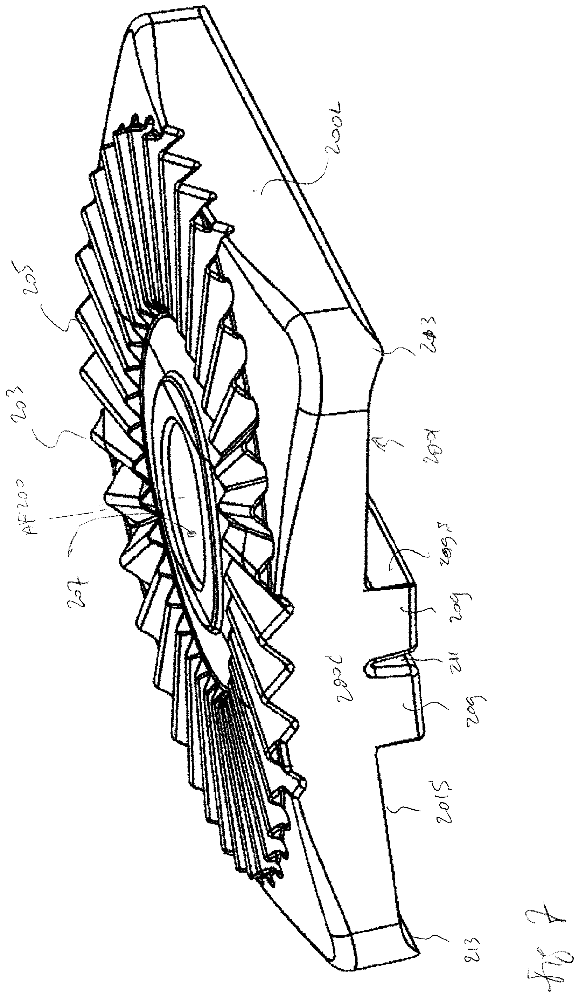

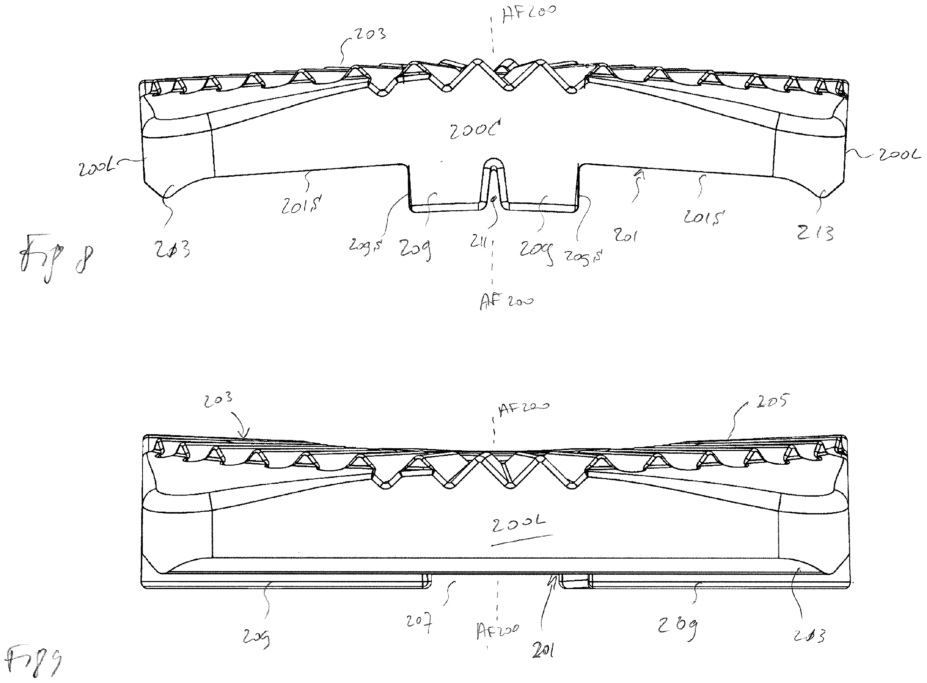

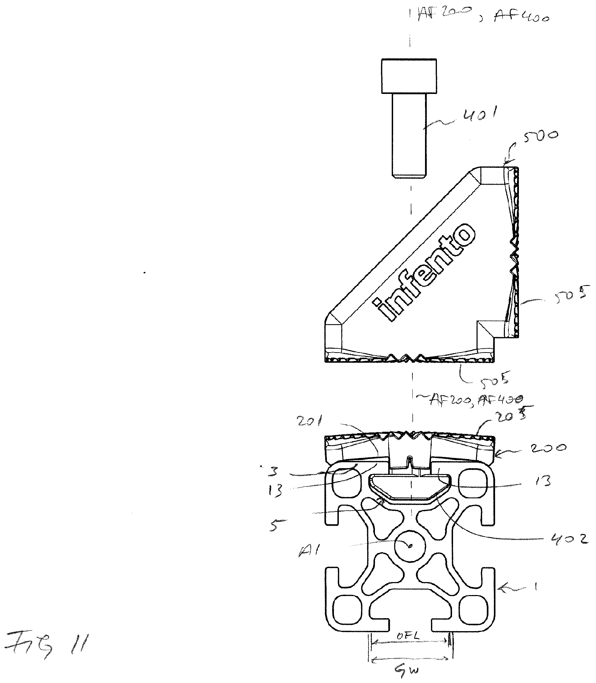

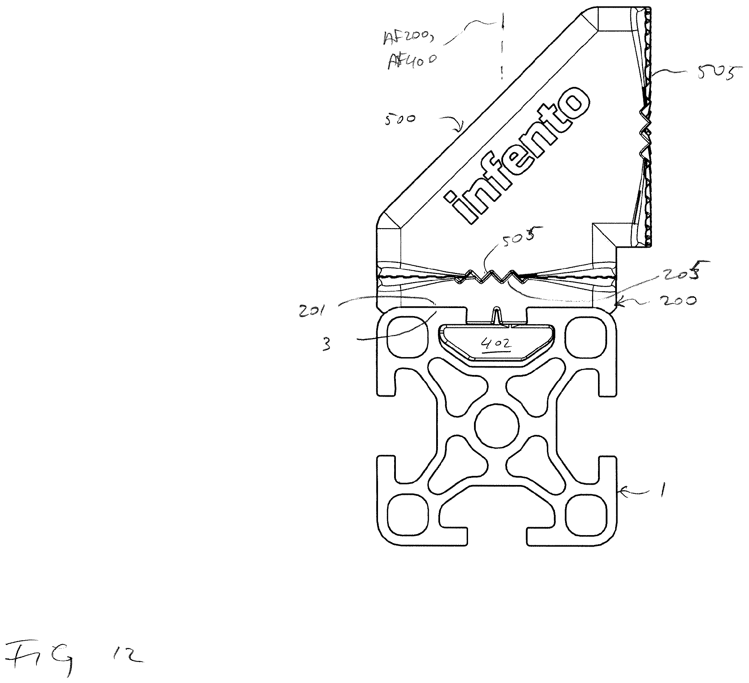

Figs. 7-10 show the second connection member 200. Figs. 11 and 12 show (two stages of) mounting and fixation of the corner member 500 onto the profile member 1 using the second connection member 200.

The second connection member 200 comprises a mounting side 201 for mounting to a side face 3 of a profile element 1, and a connection side 203 opposite of the mounting side 201. Here, like the first connection member 100, the connection side 203 is provided with a profiled connection portion 205 and the connection member 200 comprises an optional through hole 207 accommodating a fastener such as a threaded bolt (not shown), thus defining a fastener position (not separately indicated) and a fastener axis AF200.

The mounting side 201 is concave, here being concave about one axis, forming a cavity between sides of the mounting side 201. The mounting side 201 comprises a mounting surface 201S provided with protrusions 209, here arranged as ribs at (or near) a central portion 200C of the mounting side 201 of the connection member 200. The protrusions 209 have outer surfaces 209S and are separated by a groove 211. The protrusions 209 are receivable in (the entrance 5E of) the groove 5 of the profile member 1. The mounting side 201 may be formed in accordance with a shape of at least part of the profile member 1 which may improve connection and/or aesthetics. Here, along sides of the mounting side 201 ribs 213 are provided which correspond to bevels of (the side face 3) of) the profile member 1.

As a preferred option the shown connection member 200 has rotational symmetry (here: twofold rotational symmetry) about the fastener position and/or fastener axis AF200 and/or it may have mirror symmetry about one or more planes comprising the fastener position and/or the fastener axis AF200.

Best seen in Figs. 11-12, for fastening the connection member 200 to (a side face 3 of) the profile member 1, the protrusions 209 are received in the recesses of the side face 3E of the profile member 1, provided by the grooves and a fastener such as a screw bolt is arranged through the through hole 207 and screwed into a mated hammerhead fixation nut, e.g. twist nut 402, received in the groove 5 of the profile member 1 (see Figs. 1 and 11).

Thus, when the fastener is not yet fully fastened, as shown in Fig. 11, the protrusions 209 are received in the recesses 5, the mounting surface 201S engages the side face 3 on opposite sides of the through hole 207 and the fastener, and a central portion of the connection member 200 is arranged in between the engaging portions and spaced from the side face 3.

By fastening the fastener to provide a fastened configuration, as shown in Fig. 12, at least the central portion of the mounting side 201, here the entire connection member 200, is flattened towards the side face 3 by the clamping of the fastener onto the flanges 13 and the mounting surface 201S engaging the side face 3. At the same time, due to the flattening of the concave shape of the connection member 200, the protrusions 209 are urged outward with respect to the fastener axis AF200, and thereby (outer sides 209S of) the protrusions 209 are urged outwardly against (inside surfaces 5S) of the opposite flange portions of the groove 5, i.e. the protrusions 209 are urged against opposite outer surfaces 5S of the recess 5. Thus, the connection member 200 is fastened and braced to the profile member 1, preventing translation and rotation of the connection member 200 with respect to the profile member 1.

The conformity of the connection member 200 to the profile member 1, here, due to the ribs 213, provides additional rotary fixation of the connection member 200 to the profile member 1 and/or prevents something being caught and/or pinched between the connection member 200 and the profile member 1. Such flattening and/or any other suitable deformation of the connection member 200 for urging the protrusions 209 outward may at least in part be controlled by one or more grooves such as groove 211 and/or other local deformation portions.

Dimensions of the profile member 1 and the connection member 200 may preferably be chosen such that upon fastening the fastener the mounting surface 201 of the connection member 200 engages the face 3 at the central portion 200C and the protrusions engage the outer walls of the flanges 13, preferably then the protrusions 209 exert a predetermined force to the flanges 13. The connection member 200 may be formed such that when thus fastened lateral sides 200L of the connection member extend parallel to sides 3 of the profile member 1, preferably being coplanar as well; compare the inclination of the lateral sides 200L relative to the side faces 3 in Fig. 12. Also or alternatively, the connection member 200 may be formed such that when thus fastened the connection side 203 is generally flat, e.g. the minima and/or maxima of profiles such as ribs of profiled connection portion 205 being generally in a respective common plane (not shown).

Best seen in Fig. 12, in the fastened configuration, the connection portions 205 and 505 of the connection member 200 and corner member 500, respectively, interengage and fix the respective members 200, 500 to each other, thus fixing the corner member 500 to the profile member 1. Note that the connection portions 205 and 505 of the connection member 200 and corner member 500, respectively, may be adjusted to and then fixed in any desired relative rotary angle predetermined by (the combination of) the profiles of the connection portions 205 and 505, so that the corner member 500 is then rotary fixed at that angle to the profile member 1. Fixation of the connection member 200 and the corner member 500 and/or any other member mounted to the connection member 200 against sliding along the profile member 1 in axial direction (along the axis A1) is provided by the clamping force of the connection member 200 onto the profile member 1 due to the fastening.

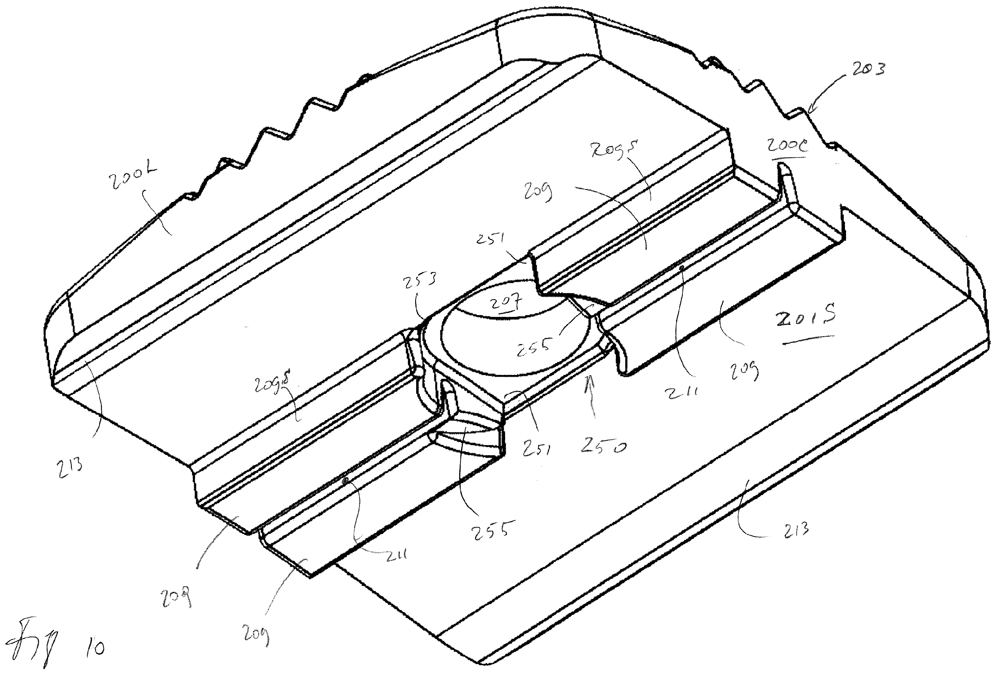

Best seen in Fig. 10, the protrusion ribs 209 are provided with structures cooperating with the fixation nut 402, discussed below.

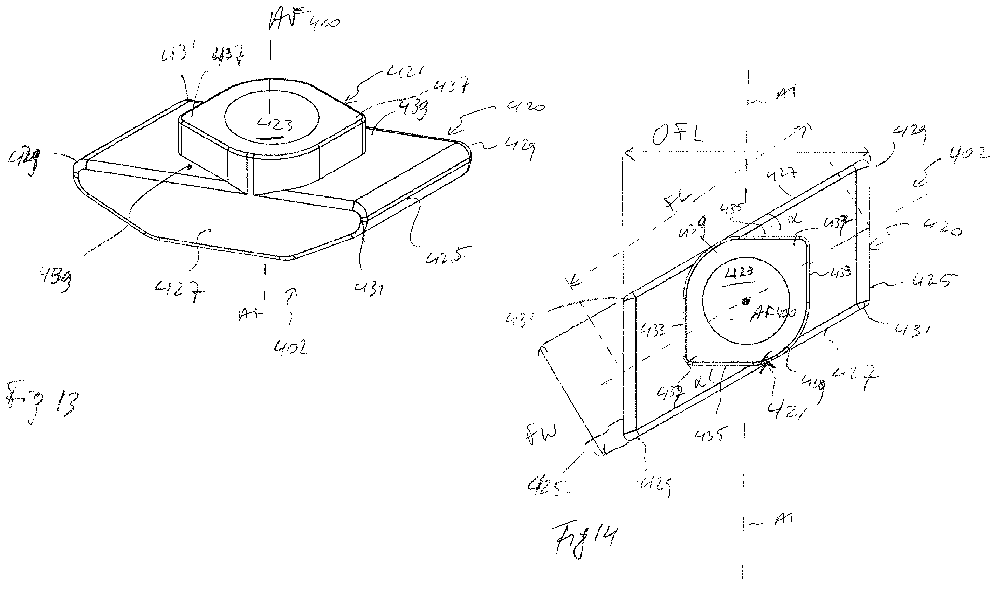

Figs. 13-14 show the twist nut 402 in two views. The twist nut 402 has a hammerhead shape for operable accommodation in the recess; the nut 402 comprises a flange 420, or main body, for being received in a groove of a profile member 1, and an associated collar 421 of smaller size, and it is provided with a threaded hole 423, which may be a through hole or a blind hole. The hole 423 defines a fastener axis AF400. The flange 420 provides a flange width FW less than, and a flange length FL of more than, a width of the entrance 5E of the groove 5 of the profile member 1, so that the nut 402 may be inserted into the groove 5 through the entrance 5E thereof in one orientation and can be fixed in the groove and used for fastening in a rotated orientation (cf Figs, 1, 11-12).

Here, the twist flange 420 has a generally rhomboid- or parallelogram-shape in cross section perpendicular to the fastener axis AF400 with relatively short flange end sides 425 and relatively long lateral flange sides 427, and opposite relatively sharp flange corners 429 at a large flange radius, and opposite relatively blunt flange corners 431 at a small flange radius.

Associated with the shape of the flange 420, the collar 421 has a generally parallelogram-shape in cross section perpendicular to the fastener axis AF400 with collar end sides 433 and lateral collar sides 435 and with opposite relatively sharp collar corners 437 at a large collar radius, which corners here are optionally substantially perpendicular, and opposite relatively blunt collar corners 439 at a small collar radius, which here are rounded. The lateral collar sides 435 each are rotationally offset from the associated lateral flange side 427, here by an angle α. Thus, the sharp collar corners 437 are generally directed towards the sharp flange corners 429 and the short flange sides 425.

The sharp collar corners 437 may generally be directed toward a position in a range of about 1/4 -1/3 of the flange end side 425 from the sharp flange corner 429, as shown in Fig. 13-14. Also or alternatively, the angle α may be in a range of 10-35 degrees, preferably in a range of 15-30 degrees, such as 20-25 degrees. In the embodiment shown in Figs. 13-14 the angle α is about 30 degrees.

Due to the rhomboidal shape of the twist flange 420, when inserted in the groove 5 of a profile member 1, the twist nut 402 may be twisted up to an angle wherein the short sides 425 are parallel with and/or engage sides of the groove, providing an operational flange length OFL associated with the groove width GW, see Figs. 1, 12, 14, so that the lateral flange sides 427 are oriented at an angle to the profile axis A1, here that angle is associated to the angle of sharp flange corner. The collar end sides 433 are parallel to the flange end sides 425. However, due to the rotational offset angle α the lateral collar sides 435 extend generally perpendicular to the collar end sides 433, the flange end sides 425 and the profile axis A1. Thus, a flange portion 439 laterally adjacent the collar angle 437 is provided.

Best seen in Fig. 10 is that the second connection member 200 comprises a recess 250 extending through the protrusions 209 for accommodating at least part of the collar 421 of the twist nut 402. The recess 250 is, as an option, shaped mated to the collar 421 (see relatively sharp corners 451 associated with sharp collar corners 437 and relatively blunt corners associated with blunt collar corners 439), and cooperates with that to define a relative rotary position of (the collar 421 of) the twist nut 402 and the connection member 200. In the connection member 200 part of the recess 250 is defined by the protrusions 209, and, optionally, part by the central portion of the connection member 200 from which the protrusions protrude; this fortifies the cooperation and renders definition of the rotary position more robust.

The shown connection member 200 also comprises associated with the recess 250 slanted surfaces 255 in protrusions 209 for guiding ((the sharp corners 437 of) the collar 421 of) the twist nut 402 into the defined rotary position defined by the combination of the shapes of the recess 250 and the collar 421. As shown, the guiding surfaces 255 may be slanted with respect to the axis to a helical orientation which preferably corresponds to that of the thread in the threaded hole 423.

For fastening the connection member 200 to the profile 1, both the protrusions 209 of the connection member 200 and the collar 421 of the twist nut 402 protrude into the entrance 5E of the groove 5 and engage each other, see Fig. 12; by cooperation of the fastener 401 and the twist nut 402 and by cooperation of the protrusions 209 and the recess 250 and guiding surfaces 251 thereof, with the twist nut 402 as explained above and the flange portions 13 of the profile member 1, the relative orientations of the parts (1, 200, 402) are guided into operable engagement and robust fastened configuration.

The disclosure is not restricted to the above-described embodiments which can be varied in a number of ways within the scope of the claims. Elements and aspects discussed for or in relation with a particular embodiment may be suitably combined with elements and aspects of other embodiments, unless explicitly stated otherwise.

## Claims

1. A construction system comprising
a profile member (1) extending along a profile axis (A1) and having a face (3, 3E) provided with at least one recess (5R, 9R);
a connection member (100, 200) being configured for being fixed onto the face (3, 3E) and for connecting to a further member (100, 200, 500);
a fastener (300, 401, 402), such as one or more of a screw, a bolt, a rivet, and a nut, for fastening the connection member (100, 200) onto the face (3, 3E);
wherein the connection member (100, 200) comprises a mounting side (101, 201) for mounting to the face (3, 3E), at least the mounting side (101, 201) being resiliently deformable and the mounting side (101, 201) being provided with protrusions (109, 209) receivable in the at least one recess (5R, 9R);
**characterized in that** the system is arranged for, when the protrusions (109, 209) are received in the at least one recess (5R, 9R), the fastener (300, 401, 402) reversibly fixing the connection member (100, 200) to the profile member and reversibly causing urging the protrusions outwardly against opposite outer walls of the at least one recess (5R, 9R).

2. The system according to claim 1, wherein the mounting side (101, 201) is in an unfastened configuration resiliently concave, for, when the protrusions (109, 209) are received in the at least one recess (5R, 9R),
engaging the face (3, 3E) on opposite sides of the fastener (300, 401, 402) and keeping a central portion (100C, 200C) arranged in between the engaging portions spaced from the face (3, 3E), and
by fastening the fastener (300, 401, 402) to provide a fastened configuration, resiliently flattening at least the central portion (100C, 200C) of the mounting side (101, 201) towards the face (3, 3E) and urging the protrusions (109, 209) outwardly against opposite outer walls of the at least one recess (5R, 9R).

3. The system according to any preceding claim, wherein the profile member (1) is elongate along a profile axis (A1), preferably having a constant cross-sectional shape in a direction perpendicular to the profile axis (A1) and/or the profile member (1) has a generally polygonal circumference, in particular rectangular circumference, e.g. square circumference,
wherein the face (3, 3E) is a side face (3) parallel along the profile axis (A1), or an end face (3E) having a normal oriented at an angle to the profile axis (A1) of 0, 15, 30, 45, 60 or 75 degrees.

4. The system according to any preceding claim, wherein the face (3, 3E) is provided with plural recesses (9R), wherein the connection member is arranged such that at least some of the protrusions (109, 209) are receivable in several of the plural recesses (9R) simultaneously and for, in the fastened configuration, urging the at least some of the protrusions (109, 209) outwardly against outer walls of the several recesses (9R).

5. The system according to any preceding claim, wherein the at least one recess (5R) is formed as an undercut groove (5) partly defined by overhanging flange portions (13), wherein the overhanging flange portions (13) may provide said outer walls of the at least one recess (5R).

6. The system according to any preceding claim, wherein the connection member (100, 200) defines a fastener position and/or fastener axis (AF100, AF200), the protrusions being urged outward with respect to the fastener position and/or fastener axis (AF100, AF200).

7. The system according to any preceding claim, wherein the connection member (100, 200) defines a fastener axis (AF100, AF200, AF400) perpendicular to the face (3, 3E).

8. The system according to any preceding claim, wherein the connection member (100, 200) is provided with a profiled connection portion (105, 205), preferably opposite of the mounting side (101, 201), and wherein the profiled connection portion (105, 205) is provided with one or more protrusions and/or recesses defining predetermined connection positions and/or -orientations for complementary mounting portions such as a same connection member (100, 200).

9. The system according to claim 8, wherein the profiled connection portion (105, 205) defines a fastener position and/or fastener axis and comprises plural protrusions such as ribs oriented radially around the fastener position and/or fastener axis.

10. A construction system according to any one of the preceding claims,
wherein the at least one recess (5R) has a general T-shape in cross-section by the profile comprising a neck portion providing the recess with a relatively narrow entrance (5E) and a wider open portion behind the entrance, e.g., an undercut groove (5) partly defined by overhanging flange portions (13);
wherein the fastener (402) has a hammerhead shape for operable accommodation in the recess (5R, 9R) and comprises a collar (421) having a first structure cooperating with a second structure of the connection member for in cooperation defining a relative rotary position of the fastener and the connection member about the fastener axis.

11. The system according to claim 10, wherein the cooperating first and second structures comprise at least one guiding portion for guiding the fastener (300, 401, 402) and the connection member towards the defined relative rotary position, in particular for guiding in an unfastened configuration of the fastener (300, 401, 402)

12. The system according to claim 11, wherein the guiding portion comprises at least one guiding surface (255) that is slanted with respect to the fastener axis, in particular being helically oriented.

13. The system according to any one of claims 10 - 12, wherein both the first and second structures are configured to be at least partly arranged on opposite sides of the fastener (300, 401, 402) in a direction along the profile axis (A1) and/or wherein the fastener (400) comprises a twist flange (420) and associated twist collar, defining a longitudinal and a lateral direction, wherein the twist flange (420) has a lateral flange side (427) and the collar has an associated lateral collar side (435), wherein the lateral collar (435) side is rotationally offset (α) from, the lateral flange side (427) and/or wherein the second cooperating structure is comprised in the protrusions (109, 209) of the mounting side of the connection member.

14. The system according to any one of claims 10 - 13, wherein the fastener (402) is a hammerhead fastener comprising a twist flange (420) for being received in a groove (5) of a profile member (1) of the construction system and associated twist collar (421), the twist flange (420) defining a longitudinal direction (FL) for operable orientation generally transverse to a profile member (1) of the construction system and a lateral direction for operable orientation generally in the axial direction (A1) of a profile (1) member of the construction system, wherein the twist flange (420) has a lateral flange side (427) and the collar has an associated lateral collar side (435), wherein the lateral collar (435) side is rotationally offset (α) from the lateral flange side (427)
the hammerhead fastener (402), comprising a threaded portion defining a fastener axis (AF) wherein relative to the fastener axis (AF),
the twist flange (420) has a generally rhomboid- or parallelogram-shape in cross section with relatively short flange sides (425) and relatively long lateral flange sides (427), opposite relatively sharp flange corners (429) at a large flange radius, and opposite relatively blunt flange corners (431) at a small flange radius, which may be rounded, and
the collar has a generally parallelogram-shape in cross section with opposite relatively sharp collar (437) corners at a large collar radius and opposite relatively blunt collar corners (439) at a small collar radius, which may be rounded.

15. The system according to claim 14, wherein the sharp collar corners (437) are generally aligned towards the sharp flange corners (429) or are directed towards the short flange sides (425) and/or wherein the hammerhead fastener (402) comprises a threaded portion defining a fastener axis (AF) wherein the collar has at least one perpendicular corner, preferably two perpendicular corners, about the fastener axis (AF).

## Patentansprüche

1. Konstruktionssystem, aufweisend:
ein Profilelement (1), das sich entlang einer Profilachse (A1) erstreckt und eine Fläche (3, 3E) hat, die mit mindestens einer Aussparung (5R, 9R) versehen ist,
ein Verbindungselement (100, 200), welches konfiguriert ist, um an der Fläche (3, 3E) fixiert zu werden und mit einem weiteren Element (100, 200, 500) verbunden zu werden,
ein Befestigungselement (300, 401, 402), wie beispielsweise eines oder mehrere von einer Schraube, einem Bolzen, einer Niet und einer Mutter, zum Befestigen des (100, 200) an der Fläche (3, 3E),
wobei das Verbindungselement (100, 200) eine Montageseite (101, 201) zum Montieren an der Fläche (3, 3E) aufweist, wobei mindestens die Montageseite (101, 201) elastisch verformbar ist und die Montageseite (101, 201) mit Vorsprüngen (109, 209) versehen ist, welche in der mindestens einen Aussparung (5R, 9R) aufnehmbar sind,
**dadurch gekennzeichnet, dass** das System so eingerichtet ist, dass, wenn die Vorsprünge (109, 209) in der mindestens einen Aussparung (5R, 9R) aufgenommen sind, das Befestigungselement (300, 401, 402) das Verbindungselement (100, 200) reversibel an dem Profilelement fixiert und reversibel bewirkt, dass die Vorsprünge nach außen gegen gegenüberliegende Außenwände der mindestens einen Aussparung (5R, 9R) Druck ausüben.

2. System nach Anspruch 1, wobei die Montageseite (101, 201) in einer unbefestigt-Konfiguration elastisch konkav ist für, wenn die Vorsprünge (109, 209) in der mindestens einen Aussparung (5R, 9R) aufgenommen sind,
ein in-Eingriff-Stehen der Fläche (3, 3E) an gegenüberliegenden Seiten des Befestigungselements (300, 401, 402) und ein Halten eines zentralen Abschnitts (100C, 200C), welcher zwischen den Eingriffabschnitten in einem Abstand von der Fläche (3, 3E) angeordnet ist, und
ein Bereitstellen einer befestigt-Konfiguration durch ein Befestigen des Befestigungselements (300, 401, 402), wodurch mindestens der zentrale Abschnitt (100C, 200C) der Montageseite (101, 201) in Richtung zu der Fläche (3, 3E) elastisch abgeflacht wird und die Vorsprünge (109, 209) nach außen gegen die gegenüberliegenden Außenwände der mindestens einen Aussparung (5R, 9R) Druck ausüben.

3. System nach irgendeinem vorigen Anspruch, wobei das Profilelement (1) entlang einer Profilachse (A1) langgestreckt ist, welches vorzugsweise eine konstante Querschnittsform in einer Richtung senkrecht zu der Profilachse (A1) hat und/oder wobei das Profilelement (1) allgemein einen polygonalen Umfang hat, insbesondere einen rechteckigen Umfang, z. B. einen quadratischen Umfang,
wobei die Fläche (3, 3E) eine Seitenfläche (3) parallel entlang der Profilachse (A1) oder eine Stirnfläche (3E) ist, die eine Normale hat, welche zu der Profilachse (A1) in einem Winkel von 0, 15, 30, 45, 60 oder 75 Grad ausgerichtet ist.

4. System nach irgendeinem vorigen Anspruch, wobei die Fläche (3, 3E) mit mehreren Aussparungen (9R) versehen ist, wobei das Verbindungselement so eingerichtet ist, dass mindestens einige der Vorsprünge (109, 209) in einigen der mehreren Aussparungen (9R) zugleich aufnehmbar sind und dass in der befestigt-Konfiguration zumindest einige der Vorsprünge (109, 209) nach außen gegen die Außenwände der einigen Aussparungen (9R) gedrückt werden.

5. System nach irgendeinem vorigen Anspruch, wobei die mindestens eine Aussparung (5R) als eine Hinterschneidung-Nut (5) geformt ist, welche teilweise durch überhängende Flanschabschnitte (13) definiert ist, wobei die überhängenden Flanschabschnitte (13) die genannten Außenwände der mindestens einen Aussparung (5R) bereitstellen.

6. System nach irgendeinem vorigen Anspruch, wobei das Verbindungselement (100, 200) eine Befestigungselementposition und/oder eine Befestigungselementachse (AF100, AF200) definiert, wobei die Vorsprünge hinsichtlich der Befestigungselementposition und/oder der Befestigungselementachse (AF100, AF200) nach außen gedrückt werden.

7. System nach irgendeinem vorigen Anspruch, wobei das Verbindungselement (100, 200) eine Befestigungselementachse (AF100, AF200, AF400) senkrecht zu der Fläche (3, 3E) definiert.

8. System nach irgendeinem vorigen Anspruch, wobei das Verbindungselement (100, 200) mit einem profilierten Verbindungsabschnitt (105, 205) versehen ist, bevorzugt entgegengesetzt zu der Montageseite (101, 201), und wobei der profilierte Verbindungsabschnitt (105, 205) mit einem oder mehreren Vorsprüngen und/oder Aussparungen versehen ist, welche vorbestimmte Verbindungspositionen und/oder -ausrichtungen für ergänzende Montageabschnitte, wie z. B. ein gleiches Verbindungselement (100, 200), definieren.

9. System nach Anspruch 8, wobei der profilierte Verbindungsabschnitt (105, 205) eine Befestigungselementposition und/oder eine Befestigungselementachse definiert und mehre Vorsprünge, wie radial ausgerichtete Rippen um die Befestigungselementposition und/oder die Befestigungselementachse herum, aufweist.

10. System nach irgendeinem der vorigen Ansprüche, wobei die mindestens eine Aussparung (5R) im Querschnitt durch das Profil eine allgemeine **T-**Form hat, aufweisend einen Halsabschnitt, welcher die Aussparung mit einem relativ engen Eingang (5E) bereitstellt, und einen erweiterten offenen Bereich hinter dem Eingang, z. B. eine Hinterschneidung-Nut (5), welche teilweise durch überhängende Flanschabschnitte (13) definiert ist,
wobei das Befestigungselement (402) eine Hammerkopf-Form für eine Betriebsaufnahme in der Aussparung (5R, 9R) hat und einen Bund (421) aufweist, welcher eine erste Struktur hat, die mit einer zweiten Struktur des Verbindungselements zusammenwirkt, um gemeinsam eine Relativdrehposition des Befestigungselements und des Verbindungselements um die Befestigungselementachse zu definieren.

11. System nach Anspruch 10, wobei die erste und die zweite Struktur, die zusammenwirken, mindestens einen Führungsabschnitt zum Führen des Befestigungselements (300, 401, 402) und des Verbindungselements in Richtung zu der definierten Relativdrehposition, insbesondere zum Führen in einer unbefestigt-Konfiguration des Befestigungselements (300, 401, 402), aufweisen.

12. System nach Anspruch 11, wobei der Führungsabschnitt mindestens eine Führungsfläche (255) aufweist, die hinsichtlich der Befestigungselementachse schräg, insbesondere wendelförmig ausgerichtet ist.

13. System nach irgendeinem der Ansprüche 10-12, wobei sowohl die erste als auch die zweite Struktur konfiguriert sind, um zumindest teilweise an den gegenüberliegenden Seiten des Befestigungselements (300, 401, 402) in einer Richtung entlang der Profilachse (A1) angeordnet zu sein und/oder wobei das Befestigungselement (400) aufweist, einen Verdrehflansch (420) und einen zugeordneten Verdrehbund, die eine Längs- und eine Querrichtung definieren, wobei der Verdrehflansch (420) eine seitliche Flanschseite (427) hat und der Bund eine zugeordnete seitliche Bundseite (435) hat, wobei die seitliche Bundseite (435) von der seitlichen Flanschseite (427) rotationsversetzt (α) ist und/oder wobei die zweite zusammenwirkende Struktur in den Vorsprüngen (109, 209) der Montageseite des Verbindungselements vorgesehen ist.

14. System nach irgendeinem der Ansprüche 10-13, wobei das Befestigungselement (402) ein Hammerkopf-Befestigungselement ist, das einen Verdrehflansch (420) zum Aufgenommen-Werden in einer Nut (5) eines Profilelements (1) des Konstruktionssystems und einen zugeordneten Verdrehbund (421) aufweist, wobei der Drehflansch (420) eine Längsrichtung (FL) für eine Betriebsausrichtung, die im Allgemeinen quer zu einem Profilelement (1) des Konstruktionssystems verläuft, und eine seitliche Richtung für die Betriebsausrichtung definiert, die im Allgemeinen in der axialen Richtung (A1) eines Profilelements (1) des Konstruktionselements verläuft, wobei der Verdrehflansch (420) eine seitliche Flanschseite (427) hat und der Bund eine zugeordnete seitliche Bundseite (435) hat, wobei die seitliche Bundseite (435) zu der seitlichen Flanschseite (427) rotationsversetzt (α) ist,
wobei das Hammerkopf-Befestigungselement (402) einen Gewindeabschnitt aufweist, welcher eine Befestigungselementachse (AF) definiert, wobei, relativ zur Befestigungselementachse (AF),
der Verdrehflansch (420) im Querschnitt eine allgemein rhombische- oder parallelogrammförmige Form mit relativ kurzen Flanschseiten (425) und relativ langen seitlichen Flanschseiten (427), gegenüberliegenden relativ scharfen Flanschecken (429) an einem großen Flanschradius, und gegenüberliegenden relativ stumpfen Flanschecken (431) an einem kleinen Flanschradius hat, welche abgerundet sein können, und wobei
der Bund im Querschnitt eine allgemein parallelogrammförmige Form mit gegenüberliegenden relativ scharfen Bundecken (437) an einem großen Bundradius und gegenüberliegenden relativ stumpfen Bundecken (439) an einem kleinen Bundradius hat, welche abgerundet sein können.

15. System nach Anspruch 14, wobei die scharfen Bundecken (437) im Allgemeinen in Richtung zu den scharfen Flanschecken (429) ausgerichtet sind oder in Richtung zu den kurzen Flanschseiten (425) ausgerichtet sind, und/oder wobei das Hammerkopf-Befestigungselement (402) einen Gewindeabschnitt aufweist, welcher eine Befestigungselementachse (AF) definiert, wobei der Bund mindestens eine rechteckige Ecke, bevorzugt zwei rechteckige Ecken, um die Befestigungselementachse (AF) hat.

## Revendications

1. Système de construction comprenant
un élément profilé (1) s'étendant le long d'un axe de profile (A1) et présentant une face (3, 3E) dotée d'au moins un évidement (5R, 9R) ;
un élément de raccordement (100, 200) conçu pour être fixé sur la face (3, 3E) et pour être raccordé à un autre élément (100, 200, 500) ;
un élément de fixation (300, 401, 402), tel qu'une ou plusieurs vis, un boulon, un rivet et un écrou, destiné à fixer l'élément de raccordement (100, 200) sur la face (3, 3E) ;
dans lequel l'élément de raccordement (100, 200) comprend un côté montage (101, 201) destiné à être monté sur la face (3, 3E), au moins le côté montage (101, 201) étant élastiquement déformable et le côté montage (101, 201) étant doté de saillies (109, 209) pouvant être reçues dans l'au moins un évidement (5R, 9R) ;
**caractérisé en ce que** le système est agencé pour, lorsque les saillies (109, 209) sont reçues dans l'au moins un évidement (5R, 9R), amener l'élément de fixation (300, 401, 402) à fixer de manière réversible l'élément de raccordement (100, 200) à l'élément profilé et provoquer de manière réversible la poussée des saillies vers l'extérieur contre des parois externes opposées de l'au moins un évidement (5R, 9R).

2. Système selon la revendication 1, dans lequel le côté montage (101, 201) est dans une configuration non fixée élastiquement concave, pour, lorsque les saillies (109, 209) sont reçues dans l'au moins un évidement (5R, 9R), mettre en prise la face (3, 3E) sur des côtés opposés de l'élément de fixation (300, 401, 402) et maintenir une partie centrale (100C, 200C) agencée entre les parties de mise en prise espacées de la face (3, 3E), et
en fixant l'élément de fixation (300, 401, 402) pour fournir une configuration fixée, aplatir élastiquement au moins la partie centrale (100C, 200C) du côté montage (101, 201) vers la face (3, 3E) et pousser les saillies (109, 209) vers l'extérieur contre des parois externes opposées de l'au moins un évidement (5R, 9R).

3. Système selon une quelconque revendication précédente, dans lequel l'élément profilé (1) est allongé le long d'un axe de profilé (A1), de préférence présentant une forme de section transversale constante dans une direction perpendiculaire à l'axe de profilé (A1) et/ou l'élément profilé (1) présente une circonférence généralement polygonale, en particulier une circonférence rectangulaire, par exemple une circonférence carrée ;
dans lequel la face (3, 3E) est une face latérale (3) parallèle le long de l'axe de profilé (A1), ou une face d'extrémité (3E) présentant une normale orientée selon un angle par rapport à l'axe de profilé (A1) de 0, 15, 30, 45, 60 ou 75 degrés.

4. Système selon une quelconque revendication précédente, dans lequel la face (3, 3E) est dotée d'une pluralité d'évidements (9R), dans lequel l'élément de raccordement est agencé de sorte qu'au moins une partie des saillies (109, 209) puissent être reçues dans plusieurs de la pluralité d'évidements (9R) simultanément et pour, dans la configuration fixée, pousser l'au moins une partie des saillies (109, 209) vers l'extérieur contre les parois externes des plusieurs évidements (9R).

5. Système selon une quelconque revendication précédente, dans lequel l'au moins un évidement (5R) est formé sous forme de rainure en contre-dépouille (5) partiellement définie par des parties brides en porte-à-faux (13), dans lequel les parties brides en porte-à-faux (13) peuvent constituer lesdites parois extérieures de l'au moins un évidement (5R).

6. Système selon une quelconque revendication précédente, dans lequel l'élément de raccordement (100, 200) définit une position d'élément de fixation et/ou un axe d'élément de fixation (AF100, AF200), les saillies étant poussées vers l'extérieur par rapport à la position d'élément de fixation et/ou à l'axe d'élément de fixation (AF100, AF200).

7. Système selon une quelconque revendication précédente, dans lequel l'élément de raccordement (100, 200) définit un axe d'élément de fixation (AF100, AF200, AF400) perpendiculaire à la face (3, 3E).

8. Système selon une quelconque revendication précédente, dans lequel l'élément de raccordement (100, 200) est doté d'une partie de raccordement profilée (105, 205), de préférence opposée au côté montage (101, 201), et dans lequel la partie de raccordement profilée (105, 205) est dotée d'une ou plusieurs saillies et/ou d'un ou plusieurs évidements définissant des positions et/ou orientations de raccordement prédéterminées pour des parties de montage complémentaires telles qu'un même élément de raccordement (100, 200).

9. Système selon la revendication 8, dans lequel la partie de raccordement profilée (105, 205) définit une position d'élément de fixation et/ou un axe d'élément de fixation et comprend une pluralité de saillies telles que des nervures orientées radialement autour de la position d'élément de fixation et/ou de l'axe d'élément de fixation.

10. Système de construction selon l'une quelconque des revendications précédentes,
dans lequel l'au moins un évidement (5R) présente une forme en T générale en section transversale, le profilé comprenant une partie col fournissant à l'évidement une entrée relativement étroite (5E) et une partie ouverte plus large derrière l'entrée, par exemple, une rainure en contre-dépouille (5) partiellement définie par des parties brides en porte-à-faux (13) ;
dans lequel l'élément de fixation (402) présente une forme de tête de marteau pour être logé de manière opérationnelle dans l'évidement (5R, 9R) et comprend un collier (421) présentant une première structure coopérant avec une deuxième structure de l'élément de raccordement pour définir en coopération une position rotative relative de l'élément de fixation et de l'élément de raccordement autour de l'axe d'élément de fixation.

11. Système selon la revendication 10, dans lequel les première et deuxième structures en coopération comprennent au moins une partie de guidage pour guider l'élément de fixation (300, 401, 402) et l'élément de raccordement vers la position rotative relative définie, en particulier pour un guidage dans une configuration non fixée de l'élément de fixation (300, 401, 402).

12. Système selon la revendication 11, dans lequel la partie de guidage comprend au moins une surface de guidage (255) qui est inclinée par rapport à l'axe d'élément de fixation, en particulier orientée hélicoïdalement.

13. Système selon l'une quelconque des revendications 10 à 12, dans lequel les première et deuxième structures sont toutes deux configurées pour être au moins partiellement agencées sur des côtés opposés de l'élément de fixation (300, 401, 402) dans une direction le long de l'axe de profilé (A1) et/ou dans lequel l'élément de fixation (400) comprend une bride de torsion (420) et un collier de torsion associé, définissant une direction longitudinale et une direction latérale, dans lequel la bride de torsion (420) présente un côté de bride latéral (427) et le collier présente un côté de collier latéral (435) associé, dans lequel le côté de collier latéral (435) est décalé en rotation (α) par rapport au côté de bride latéral (427) et/ou dans lequel la deuxième structure en coopération est comprise dans les saillies (109, 209) du côté montage de l'élément de raccordement.

14. Système selon l'une quelconque des revendications 10 à 13, dans lequel l'élément de fixation (402) est un élément de fixation à tête de marteau comprenant une bride de torsion (420) destinée à être reçue dans une rainure (5) d'un élément profilé (1) du système de construction et un collier de torsion (421) associé, la bride de torsion (420) définissant une direction longitudinale (FL) pour une orientation opérationnelle généralement transversale à un élément profilé (1) du système de construction et une direction latérale pour une orientation opérationnelle généralement dans la direction axiale (A1) d'un élément profilé (1) du système de construction, dans lequel la bride de torsion (420) présente un côté de bride latéral (427) et le collier présente un côté de collier latéral (435) associé, dans lequel le côté de collier latéral (435) est décalé en rotation (α) par rapport au côté de bride latéral (427)
l'élément de fixation à tête de marteau (402) comprenant une partie filetée définissant un axe d'élément de fixation (AF) dans lequel, par rapport à l'axe d'élément de fixation (AF),
la bride de torsion (420) présente une forme généralement en losange ou en parallélogramme en section transversale avec des côtés de bride relativement courts (425) et des côtés de bride latéraux relativement longs (427), des coins de bride relativement tranchants opposés (429) au niveau d'un grand rayon de bride, et des coins de bride relativement émoussés opposés (431) au niveau d'un petit rayon de bride, qui peuvent être arrondis, et
le collier présente une forme généralement de parallélogramme en section transversale avec des coins de collier relativement tranchants opposés (437) au niveau d'un grand rayon de collier et des coins de collier relativement émoussés opposés (439) au niveau d'un petit rayon de collier, qui peuvent être arrondis.

15. Système selon la revendication 14, dans lequel les coins de collier tranchants (437) sont généralement alignés vers les coins de bride tranchants (429) ou sont dirigés vers les côtés de bride courts (425) et/ou dans lequel l'élément de fixation à tête de marteau (402) comprend une partie filetée définissant un axe d'élément de fixation (AF) dans lequel le collier présente au moins un coin perpendiculaire, de préférence deux coins perpendiculaires, autour de l'axe d'élément de fixation (AF).
